Europäisches Patentamt

European Patent Office

Office européen des brevets

(11) Veröffentlichungsnummer: **0 266 498 B1**

## (12) EUROPÄISCHE PATENTSCHRIFT

(45) Veröffentlichungstag der Patentschrift: **04.11.92**

(21) Anmeldenummer: **87111626.5**

(22) Anmeldetag: **11.08.87**

(51) Int. Cl.5: **G01B 21/00**, G01B 5/00,
G01D 5/26

---

(54) Verfahren zur Herstellung einer Massverkörperung.

---

(30) Priorität: **05.11.86 DE 3637628**

(43) Veröffentlichungstag der Anmeldung:
**11.05.88 Patentblatt 88/19**

(45) Bekanntmachung des Hinweises auf die
Patenterteilung:
**04.11.92 Patentblatt 92/45**

(84) Benannte Vertragsstaaten:
**AT CH DE FR GB IT LI**

(56) Entgegenhaltungen:
**EP-A- 0 110 059**
**DE-A- 3 106 701**
**DE-A- 3 419 527**
**DE-U- 7 513 496**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Miller, Walter, Dr.**
**Adalbert-Stifter-Strasse 19**
**W-8220 Traunstein(DE)**

## Beschreibung

Die Erfindung bezieht sich auf Verfahren zur Herstellung einer Maßverkörperung gemäß den Oberbegriffen der Ansprüche 1 und 2.

Derartige Maßverkörperungen werden beispielsweise in Längenmeßeinrichtungen bei Werkzeugmaschinen verwendet. Während des Meßbetriebes treten Probleme auf, da beim Betrieb von Werkzeugmaschinen durch die sehr unterschiedlichen Materialpaarungen bei Maschine, Längenmeßeinrichtung und nicht zuletzt Werkstück, Temperaturänderungen zu unterschiedlichen, thermisch bedingten Abmessungsänderungen der diversen Bauteile führen. Da aus den verschiedensten Gründen in den seltensten Fällen das Maschinenteil und der Maßstab sowie das Gehäuse für den Maßstab aus Materialien mit gleichen thermischen Ausdehnungskoeffizienten bestehen werden, unterliegen bei den unvermeidlichen Temperaturänderungen insbesondere das Maschinenteil und der Maßstab unterschiedlichen thermischen Längenänderungen, so daß Meßungenauigkeiten auftreten können, die bei den heutigen Anforderungen an die Meßgenauigkeit nicht mehr tragbar sind. Am häufigsten kombiniert man Grauguß für die Maschinenteile, Aluminium für das Gehäuse und Glas oder Stahl für den Maßstab miteinander.

Diese Problematik ist seit langem bekannt und es wurden bereits zahlreiche Lösungen vorgeschlagen, die Fehler, die diese thermisch bedingten Abmessungsänderungen hervorrufen, mit Hilfe von sogenannten Temperaturkompensationen zu verringern. Von den vielen Vorschlägen seien hier nur einige derjenigen gewürdigt, bei denen die Kompensation mit Hilfe der Maßverkörperung erfolgt.

Eine Kompensationsvorrichtung, die neben dem Temperaturfehler auch Ungenauigkeiten der Maschine, an der sie installiert ist, ausgleicht, ist in dem DE-GM 75 13 496 beschrieben. Ein Glasmaßstab ist unter Zwischenfügung einer hochelastischen Schicht in einem Aluminium-Hohlprofil eingekittet. Der Hohlkörper ist mit speziellen Endstükken an der Maschine befestigt. Durch die hochelastische Schicht ist der Glasmaßstab von dem Aluminium-Hohlprofil gewissermaßen mechanisch entkoppelt, so daß von der Maschine keine Zwangskräfte auf den Glasmaßstab übertragen werden. Die Kompensationseinrichtung greift an den Stirnseiten des Glasmaßstabes an und kann diesen stauchen oder strecken, wie es der Fehlerverlauf erfordert. Mit der Kompensationseinrichtung wird also die effektive Länge der Teilung eingestellt. Diese Art der Fehlerkompensation hat sich bewährt und auch die schwimmende Befestigung eines Maßstabes in einer Meßvorrichtung ist spätestens aus der DE-PS 11 76 382 bekannt und gilt seitdem als notwendig, um die hochgenaue Meßteilung frei von Zwangskräften zu befestigen. Eine Reihe weiterer Druckschriften belegt, daß die Fachwelt es für erforderlich hielt, die Meßteilung von der Maschine so zu entkoppeln, daß keine thermisch bedingten Zwangskräfte die Meßteilung beeinflussen. Als Beispiel seien hier die DE-OS 20 16 253, die US-PS 3,816,002 und die US-PS 3,629,945 genannt.

Erst neueren Druckschriften läßt sich entnehmen, daß die Fachwelt sich von diesem Vorurteil langsam löst und Maßverkörperungen fest mit einer Maschine verbindet. Für diese neue Entwicklung sei die DE-OS 34 19 527 als Beispiel genannt. Dort wird eine Maßverkörperung bei Normaltemperatur von beispielsweise 20° C mit Hilfe von Kalibrierschrauben geeicht. Bei der Montage der Meßeinrichtung an die Maschine wird zunächst die Temperatur der Anbaufläche gemessen. Mit Hilfe der Kalibrierschrauben wird die Maßverkörperung auf die Temperatur der Anbaufläche eingestellt und damit auf die Maschine geeicht. Anschliessend wird die Positionsmeßeinrichtung fest an der Maschine montiert. Durch eine starre Befestigung der beiden Enden des Maßstabes an der Maschine erfahren bei Temperaturänderungen sowohl die Maschine als auch der Maßstab die gleichen thermischen Längenänderungen, so daß thermisch bedingte Meßungenauigkeiten bei der Bearbeitung eines Werkstückes nicht mehr auftreten können. Diesem Vorschlag sind jedoch für biegesteife Maßstäbe aus Glas verhältnismäßig enge Grenzen gesetzt, denn bei größerer Erwärmung gegenüber der Normaltemperatur dehnt sich der Grundkörper auf dem der Teilungsträger befestigt ist stärker aus als der Glasmaßstab und die stirnseitigen Klebeverbindungen reißen ab.

Der Erfindung liegt daher die Aufgabe zugrunde, eine Maßverkörperung zu schaffen, die auch bei größerer Erwärmung gegenüber der Normaltemperatur die temperaturbedingten Längenänderungen der Maschine, an der sie angebaut ist, mitmacht.

Diese Aufgabe wird durch Verfahren zur Herstellung einer Maßverkörperung gemäß den Ansprüchen 1 und 2 gelöst.

Mit Hilfe der Zeichnungen soll die Erfindung anhand von Ausführungsbeispielen noch näher erläutert werden.

Die Figuren 1 bis 3 stellen Abschnitte eines Verfahrens zur Herstellung einer Maßverkörperung dar und die Figuren 4 bis 6 stellen Abschnitte eines alternativen Verfahrens zur Herstellung einer Maßverkörperung dar.

Es zeigt:

Figur 1      einen Grundkörper mit einem schwimmend befestigten Teilungsträger im Urspungszustand

Figur 2      eine erwärmte Maßverkörperung mit Befestigungselementen,

Figur 3 eine Maßverkörperung im Endzustand,

Figur 4a ein Grundkörper für eine Maßverkörperung,

Figur 4b ein Teilungsträger für eine Maßverkörperung,

Figur 5 den Teilungsträger in abgekühltem Zustand und

Figur 6 eine Maßverkörperung im Endzustand.

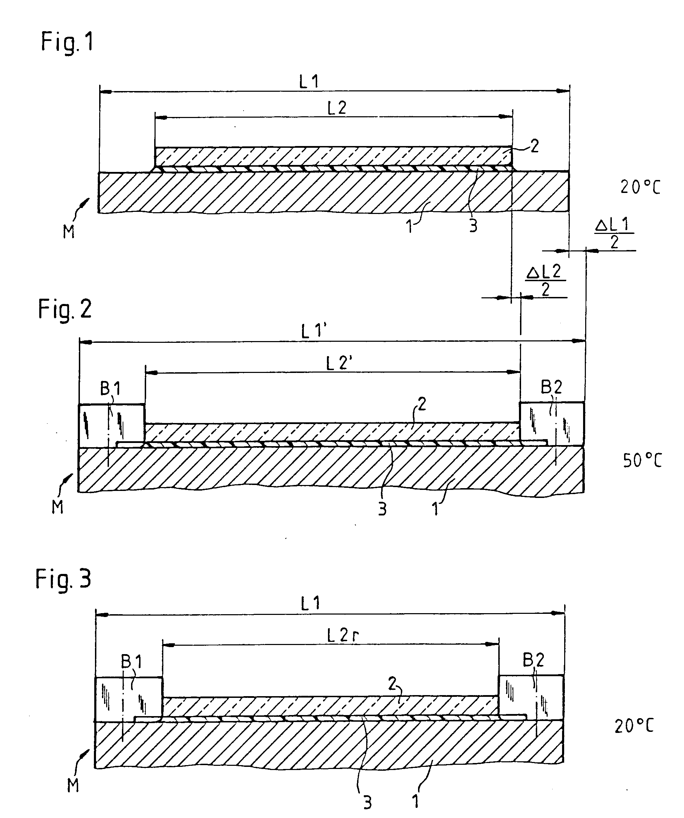

Ein in Figur 1 gezeigter Grundkörper 1 trägt einen schwimmend gelagerten biegesteifen Teilungsträger 2. Die schwimmende Lagerung wird durch eine elastische Klebstoffschicht 3 realisiert.

Bei einer Normaltemperatur von ca. 20° C weist der Grundkörper 1, der aus Stahl bestehen kann, eine Länge L1 auf. Der Teilungsträger 2, der aus Glas bestehen kann, weist bei dieser Temperatur eine Länge L2 auf.

Die Einheit aus Grundkörper 1 und Teilungsträger 2 wird nun erhitzt auf eine Temperatur von beispielsweise 50° C. Diese Endtemperatur wird von dem Temperaturbereich bestimmt, in dem die Maschine arbeitet, an der die erfindungsgemäße Maßverkörperung angebaut werden soll.

Aufgrund der Temperaturerhöhung kommt es zu Veränderungen der Abmessungen von Grundkörper 1 und Teilungsträger 2. Für die Erfindung sind jedoch hier nur die Längenänderungen von Interesse.

Da Stahl einen größeren Temperaturkoeffizienten hat, als Glas, weist der Grundkörper 1 bei 50° C eine Länge von L1' auf, der Teilungsträger dagegen eine Länge von L2'. Die Veränderung $\Delta$ L1 ist also ungleich $\Delta$ L2.

In diesem - in Figur 2 dargestellten - Zustand wird der Teilungsträger 2 mit Befestigungselementen, die Klötzchen B1 und B2 sein können, auf dem Grundkörper 1 fixiert.

Dabei sind die Berührungsflächen der Klötzchen B1 und B2 den Stirnseiten des Teilungsträgers genauestens angepaßt. Die Befestigung der Klötzchen B1 und B2 auf dem Grundkörper 1 kann in beliebiger Weise erfolgen, muß jedoch ausgesprochen starr sein.

Nach der Montage der Klötzchen B1 und B2 kann die nun vollständige Maßverkörperung M abgekühlt werden. Dabei schrumpft der Grundkörper 1 wieder auf seine ursprüngliche Länge L1 zusammen und nimmt die Klötzchen B1 und B2 mit, die zwischen sich den Teilungsträger 2 halten.

Die Klötzchen B1 und B2 stauchen bei der Abkühlung den Teilungsträger 2 nahezu um das Maß, um daß sich der stählerne Grundkörper 1 im erwärmten Zustand mehr ausgedehnt hatte, als der gläserne Teilungsträger 2. Der Teilungsträger 2 steht unterhalb der vorerwähnten Aufwärmetemperatur somit ständig unter Druckspannung.

Damit jedoch die Meßteilung - die hier nicht gezeigt ist - stimmt, muß beim Aufbringen der Teilstriche der Meßteilung deren Strichabstand größer gemacht werden. Der Betrag um den die Teilung länger gemacht werden muß, richtet sich nach dem Verhältnis der Temperaturkoeffizienten des Grundkörpers 1 und des Teilungsträgers 2 zueinander sowie nach der Höhe der gewünschten Aufwärmetemperatur.

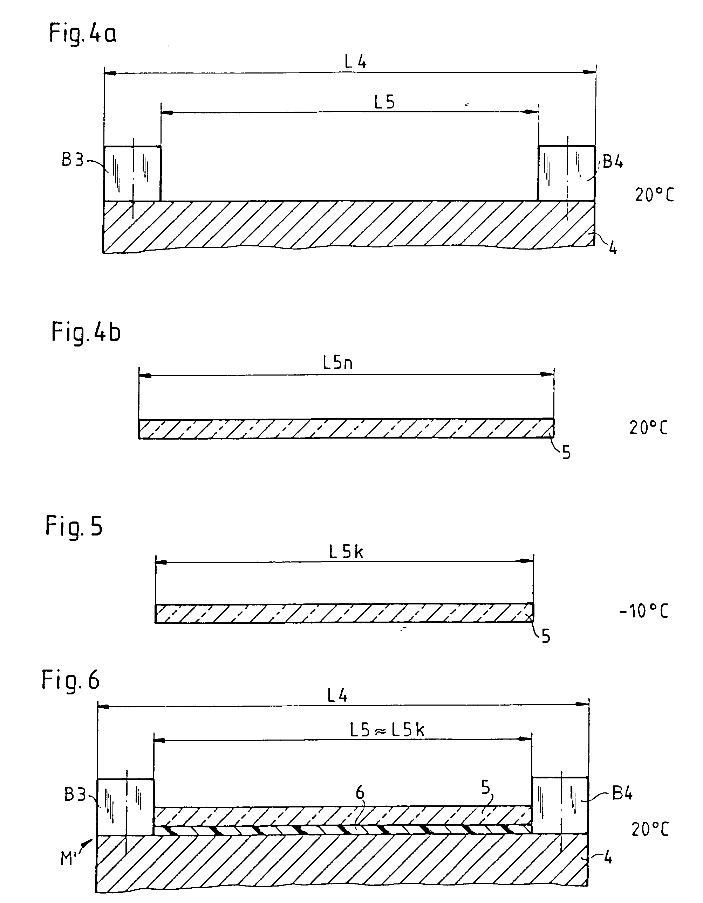

In Figur 4a ist ein Grundkörper 4 dargestellt, auf dem als Klötzchen ausgebildete Befestigungselemente B3 und B4 fixiert sind. Der Grundkörper 4 mit den Klötzchen B3 und B4 hat bei Normaltemperatur von ca. 20° C eine Gesamtlänge von L4. Die lichte Weite zwischen den beiden Klötzchen B3 und B4 ist mit L5 bezeichnet.

Ein in Figur 4b dargestellter Teilungsträger 5 weist bei Normaltemperatur von ca. 20° C eine Länge von L5n auf. Eine nicht dargestellte Meßteilung, die sich auf dem Teilungsträger 5 befindet, ist um einen Betrag zu lang, der der Differenz zwischen der Länge L5n des Teilungsträgers 5 und der lichten Weite L5 zwischen den Klötzchen B3 und B4 entspricht.

In Figur 5 ist der gleiche Teilungsträger 5 wie in Figur 4b dargestellt. Da er allerdings auf eine Temperatur von ca. -10° C abgekühlt ist, hat sich seine Länge auf den Betrag von L5k verringert. Dieser Länge L5k entspricht die lichte Weite L5 zwischen den Klötzchen B3 und B4. Der Teilungsträger 5 wird im abgekühlten Zustand - also bei ca. -10° C - zwischen den Klötzchen B3 und B4 unter Zwischenschaltung einer klebstoffartigen Schicht 6 auf dem Grundkörper 4 montiert, der dabei die Normaltemperatur von ca. 20° C aufweist.

Bei der nachfolgenden Erwärmung des Teilungsträgers 5 auf Normaltemperatur hat dieser das Bestreben, sich auf seine ursprüngliche Länge von L5 auszudehnen, was jedoch von den am Grundkörper 4 fixierten Klötzchen B3 und B4 verhindert wird. Bei Normaltemperatur steht also der Teilungsträger 5 nach der Montage unter Druckspannung.

Die fertige Maßverkörperung M, M' kann nun starr an der Anbaufläche der Maschine montiert werden. Dabei müssen die Temperaturen der Maßverkörperung M, M' und die Temperatur der Anbaufläche übereinstimmen. Das Material des Grundkörpers 1, 4 der Maßverkörperung M, M' muß bezüglich seines Temperaturkoeffizienten auf das Material der Maschine abgestimmt sein. Bei Temperaturgang der Maschine wird die Maßverkörperung M, M' in gleichem Maße verändert, wie sich die Maschine in ihrem Abmessungen ändert. Da die Veränderung im allgemeinen eine Vergrößerung der Länge sein wird, kann der Teilungsträger 2, 5 aufgrund der inneren Druckspannung diese Änderung noch unterstützen, da sich bei Erwärmung der Maschine die inneren Druckspannungen im Teilungsträger 2, 5 abbauen.

Es versteht sich, daß die Dimensionierung des Grundkörpers 1, 4 und der Klötzchen B1, B2, B3, B4 so gewählt werden muß, daß die Spannungskräfte im biegesteifen Teilungsträger 2, 5 die Form des Grundkörpers 1, 4 und der Klötzchen B1, B2, B3, B4 nur unwesentlich verändern können.

**Patentansprüche**

1. Verfahren zur Herstellung einer Maßverkörperung bestehend aus einem biegesteifen Teilungsträger und einem Grundkörper mit unterschiedlichen Temperaturkoeffizienten und Befestigungselementen zum Befestigen des Teilungsträgers auf dem Grundkörper, dadurch gekennzeichnet, daß der Teilungsträger (2) mit kleinerem Temperaturkoeffizienten als der des Grundkörpers (1) bei Normaltemperatur auf dem Grundkörper (1) schwimmend befestigt wird, anschließend mit diesem zusammen auf eine vorbestimmte Temperatur erwärmt und dann zumindest stirnseitig mit den Befestigungselementen (B1, B2) am Grundkörper (1) so fixiert wird, daß beim Abkühlen auf Normaltemperatur der Teilungsträger (2) gestaucht ist.

2. Verfahren zur Herstellung einer Maßverkörperung bestehend aus einem biegesteifen Teilungsträger und einem Grundkörper mit unterschiedlichen Temperaturkoeffizienten und Befestigungselementen zum Befestigen des Teilungsträgers auf dem Grundkörper, dadurch gekennzeichnet, daß der Teilungsträger (5) mit kleinerem Temperaturkoeffizienten als der des Grundkörpers (4): in auf eine vorbestimmte Temperatur abgekühltem Zustand zumindest stirnseitig mit den Befestigungselementen (B3, B4) am normal temperierten Grundkörper (4) so fixiert wird, daß der Teilunsträger (5) beim Erwärmen auf Normaltemperatur gestaucht ist.

3. Verfahren nach Anspruch 1 oder 2, dadurch gekennzeichnet, daß auf dem Teilungsträger (2, 5) bei Normaltemperatur eine Meßteilung im Übermaß aufgebracht wird, wobei der Betrag des Übermaßes so gewählt ist, daß die Meßteilung bei gestauchtem Teilungsträger (2, 5) korrekt ist.

4. Verfahren nach den Ansprüchen 1 und 3, dadurch gekennzeichnet, daß der Betrag des Übermaßes aus dem Verhältnis der Temperaturkoeffizienten des Grundkörpers (1) und des Teilungsträgers (2) zueinander und der vorbestimmten Erwärmungs-Temperatur ermittelt wird.

5. Verfahren nach den Ansprüchen 2 und 3, dadurch gekennzeichnet, daß der Betrag des Übermaßes aus dem Verhältnis der Temperaturkoeffizienten des Grundkörpers (4) und des Teilungsträgers (5) zueinander und der vorbestimmten Abkühlungs-Temperatur ermittelt wird.

**Claims**

1. A method of manufacturing a measuring device comprising a scale division carrier resistant to bending and a basic member with differing temperature coefficients, and attachment elements for securing the scale division carrier to the basic member, characterised in that the scale division carrier (2), with a smaller temperature coefficient than that of the basic member (1), is at normal temperature floatingly attached to the basic member (1), is then heated together with said basic member (1) to a predetermined temperature, and then fixed at least at one end to the attachment elements (B1, B2) on the basic member (1), so that, when cooled to normal temperature, the scale division carrier (2) is buckled.

2. A method of manufacturing a measuring device comprising a scale division carrier resistant to bending and a basic member with differing temperature coefficients, and attachment elements for securing the scale division carrier to the basic member, characterised in that the scale division carrier (2), with a smaller temperature coefficient than that of the basic member (4), in a condition in which it is cooled to a predetermined temperature, is fixed at least at one end to the attachment elements (B3, B4) on the basic member (4) which is at normal temperature, so that the scale division carrier (5), when heated to normal temperature, is buckled.

3. A method according to Claim 1 or 2, characterised in that there is applied to the scale division carrier (2, 5) at normal temperature an oversized measurement scale division, the amount of oversizing being so selected that the scale division is correct when the scale division carrier (2, 5) is buckled.

4. A method according to Claims 1 and 3, characterised in that the amount of oversizing is determined from the ratio of the temperature coefficients of the basic member (1) and of the scale division carrier (2) to one another, and from the predetermined heating temperature.

**5.** A method according to Claims 2 and 3, characterised in that the amount of oversizing is determined from the ratio of the temperature coefficients of the basic member (4) and of the scale division carrier (5) to one another, and from the predetermined cooling temperature.

**Revendications**

**1.** Procédé de fabrication d'une mesure matérialisée formée d'un support de graduation rigide en flexion et d'un corps ayant des coefficients de température différents ainsi que d'éléments de fixation pour la fixation du support de graduation sur le corps, caractérisé par le fait que, à l'aide des éléments de fixation (B1, B2), on fixe le support de graduation (2) dont le coefficient de température est inférieur à celui du corps (1), à température ambiante, de manière flottante sur le corps (1), on le porte avec ce dernier à une température prédéterminée puis on le fixe sur le corps (1), côté extrémité frontale au moins, de manière telle que le support de graduation (2) soit comprimé après refroidissement à la température normale.

**2.** Procédé de fabrication d'une mesure matérialisée formée d'un support de graduation rigide en flexion et d'un corps ayant des coefficients de température différents ainsi que d'éléments de fixation pour la fixation du support de graduation sur le corps, caractérisé par le fait que, à l'aide des éléments de fixation (B1, B2), on fixe le support de graduation (5) dont le coefficient de température est inférieur à celui du corps (4), dans l'état obtenu après refroidissement jusqu'à une température prédéterminée, sur le corps (4) qui se trouve à la température normale, de manière telle que le support de graduation (5) soit comprimé lors du réchauffement à la température normale.

**3.** Procédé selon la revendication 1 ou 2, caractérisé par le fait qu'on applique sur le support de graduation (2, 5) une graduation de mesure qui présente une surmesure à la température normale, la valeur de la surmesure étant choisie de manière telle que la graduation de mesure soit exacte lorsque le support de graduation (2, 5) est comprimé.

**4.** Procédé selon les revendications 1 et 3, caractérisé par le fait qu'on détermine la valeur de la surmesure à partir du rapport des coefficients de température du corps (1) et du support de graduation (2) et de la température de réchauffage prédéterminée.

**5.** Procédé selon les revendications 2 et 3, caractérisé par le fait qu'on détermine la valeur de la surmesure à partir du rapport des coefficients de température du corps (4) et du support de graduation (5) et de la température de refroidissement prédéterminée.

Fig. 1

Fig. 2

Fig. 3

Fig. 4a

L4

L5

B3 B4

20°C

4

Fig. 4b

L5n

20°C

5

Fig. 5

L5k

-10°C

5

Fig. 6

L4

L5 ≈ L5k

B3 6 5 B4

M' 20°C

4